# EUROPEAN PATENT APPLICATION

(11) **EP 4 333 118 A1**
(43) Date of publication of application: **06.03.2024**
(21) Application number: 22890360.5
(22) Date of filing: 02.11.2022
(51) Int. Cl.: H01M 4/36, H01M 4/525, H01M 4/505, H01M 4/62, H01M 10/0562, H01M 10/052, C01G 53/00, H01M 4/02

(54) **CATHODE ACTIVE MATERIAL FOR SECONDARY BATTERY**

(30) Priority: 02.11.2021 KR 20210149123; 01.11.2022 KR 20220143856
(71) Applicant: LG Energy Solution, Ltd., Seoul 07335 (KR)
(72) Inventor: LEE, Daejin, Daejeon 34122 (KR); KIM, Ji Young, Daejeon 34122 (KR); CHOI, Lak Young, Daejeon 34122 (KR); HAH, Hoejin, Daejeon 34122 (KR)
(74) Representative: Goddar, Heinz J.
(86) International application number: PCT/KR2022/017021
(87) International publication number: WO 2023/080629

(57) **Abstract**

The present invention relates to a positive electrode active material for an secondary battery, wherein the positive electrode active material has a structure in which a shell composed of the niobium oxide containing the alkaline earth metal is adsorbed on the surface of the core containing the lithium metal oxide, and thus the void phenomenon at the contact surface that can occur between the positive electrode active material and the solid electrolyte and side reactions between them are reduced, and the increase in resistance at the electrode due to charging and discharging is suppressed, so that there is an advantage that the lifetime of the secondary battery comprising it is improved.

## Description

### [Technical Field]

This application claims the benefit of priority based on Korean Patent Application No. 10-2021-0149123 filed on November 2, 2021, and Korean Patent Application No. 10-2022-0143856 filed on November 1, 2022, all contents of which are incorporated herein by reference.

The present invention relates to a positive electrode active material for secondary battery.

### [Background Art]

A lithium all-solid-state battery is a battery that can convert chemical energy directly into electrical energy by using a sulfide-based or oxide-based solid electrolyte and oxidizing or reducing lithium ions through an all-solid-state material. In particular, the lithium all-solid-state battery is increasing in demand as a sustainable secondary battery because it can solve the problems of low energy density and high cost and the toxicity problem, which are the limitations of lithium secondary batteries currently in use, due to the advantages of environment-friendly, safety, and high energy density capacity storage.

However, the all-solid-state battery has problems such as a decrease in the capacity of the battery, due to irreversibility by the interfacial side reaction between the sulfide-based or oxide-based solid electrolyte and the positive electrode during charging/discharging reaction; and the non-uniform charge distribution in the electrode by the interfacial resistance and space-charge layer formation. In addition, the low ionic conductivity of the all-solid-state material itself has hindered the commercialization of the lithium all-solid-state battery which is a next-generation battery.

In order to solve these problems, positive electrode active materials using a metal oxide as a medium have been developed. However, the positive electrode active materials developed so far have significantly increased in capacity in terms of charging and discharging performance compared to an oxide-based positive electrode active material as a new positive electrode active material, whereas it has a problem in that the capacity retention rate is remarkably reduced due to an increase in resistance as charging and discharging proceed, compared to the existing positive electrode active material or negative electrode active material.

In addition, a technology of surface-treating the positive electrode active material with metal oxide, etc. and then applying it to an all-solid-state battery has been developed, but it is also insignificant in improving the charging/discharging performance, and has an unsuitable limit for commercialization due to the high unit cost of the raw material used.

### [Prior Art Document]

### [Patent Document]

(Patent Document 1) Korean Patent Publication No. 10-1582394

### [Disclosure]

### [Technical Problem]

Therefore, it is an object of the present invention to provide a positive electrode active material for secondary battery, which can prevent the occurrence of a void phenomenon at the contact surface that may occur between the positive electrode active material and the solid electrolyte or the induction of a side reaction between them, and may improve the lifetime of the battery by suppressing an increase in the resistance of the electrode during charging and discharging.

### [Technical Solution]

In order to solve the above-mentioned problems, the present invention, in one embodiment, provides a positive electrode active material for a secondary battery, comprising
a core containing a lithium metal oxide; and
a shell adsorbed on the surface of the core and containing niobium oxide,
wherein the niobium oxide comprises an alkaline earth metal.

In addition, the lithium metal oxide is represented by the following Formula 1:

[Formula 1] Liₓ[Ni_{y}Co_{z}Mn_{w}M¹ᵥ]Oᵤ

wherein,
M¹ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, and 1.5≤u≤4.5, respectively.

In addition, niobium oxide comprising alkaline earth metal is selected from the group consisting of SrNbO, SrNbO₂, SrNbO₃, Sr (NbO₃)₂, BaNbO, BaNbO₂, BaNbO₃, Ba (NbO₃)₂, RaNbO, RaNbO₂, RaNbO₃ and Ra(NbO₃)₂.

In addition, the alkaline earth metal may be included in an amount of 0.01 to 10 % by weight based on the total weight of the niobium oxide.

In addition, the niobium oxide may be included in an amount of 0.1 to 10 % by weight based on the total weight of the positive electrode active material.

In addition, the average particle size of the positive electrode active material for a secondary battery is 0.5 pm to 10 um.

In addition, the shell containing the niobium oxide is adsorbed to more than 60% of the area of the core based on the total area of the core.

In addition, the positive active material for a secondary battery further comprises a coating layer containing carbon on the shell.

In addition, the content of carbon contained in the coating layer is 0.1 to 2.0 % by weight based on the total weight of the positive electrode active material.

Further, the present invention, in one embodiment, provides a method for preparing a positive electrode active material for a secondary battery, comprising steps of preparing a mixture containing lithium metal oxide, niobium oxide and alkaline earth metal; and heat-treating the mixture.

In addition, the lithium metal oxide is represented by Formula 1 below:

[Formula 1] Liₓ[Ni_{y}Co_{z}Mn_{w}M¹ᵥ]Oᵤ

wherein,
M¹ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, and 1.5≤u≤4.5, respectively.

In addition, the mixture contains niobium oxide in an amount of 0.1 to 10 % by weight relative to the total weight of the mixture.

In addition, the step of heat-treating is performed at 300 °C to 900 °C.

In addition, the step of heat-treating is performed in the range of 0.1 atm to 10.0 atm.

In addition, the step of heat-treating is performed in the range of 1 hour to 10 hours.

In addition, the method for preparing a positive electrode active material for a secondary battery further comprises after the heat-treatment step, forming a coating layer containing carbon on at least a portion of the surface of the shell.

In addition, the content of carbon contained in the coating layer is 0.1 to 2.0 % by weight based on the total weight of the positive electrode active material.

Furthermore, the present invention, in one embodiment, provides an all-solid-state lithium secondary battery comprising, a positive electrode comprising the positive electrode active material according to the present invention as described above; a negative electrode; and a sulfide-based solid electrolyte disposed between the positive electrode and the negative electrode.

In this case, the sulfide-based solid electrolyte may comprise at least one selected from the group consisting of Li2S-SiS2, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and Li₂S-P₂S₅.

Furthermore, the present invention, in one embodiment, provide a device comprising the all-solid-state lithium secondary battery according to the present invention as described above.

In addition, the device is an electric vehicle.

Further, the present invention, in one embodiment, provide a positive electrode active material for a secondary battery comprising,
a core containing a lithium metal oxide; and
a shell adsorbed on the surface of the core and containing niobium oxide, wherein the niobium oxide comprises an alkaline earth metal,
wherein the lithium metal oxide is represented by the following Formula 1:

   [Formula 1] Liₓ[Ni_{y}Co_{z}Mn_{w}M¹ᵥ]Oᵤ

   wherein,
   M¹ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
   x, y, z, w, v and u are 1.0≤x≤1.30, 0.1≤y<0.95, 0.01<z≤0.5, 0.01<w≤0.5, 0≤v≤0.2, 1.5≤u≤4.5, respectively,
   niobium oxide comprising alkaline earth metal is selected from the group consisting of SrNbO, SrNbO₂, SrNbO₃, Sr(NbO₃)₂, BaNbO, BaNbO₂, BaNbO₃, Ba(NbO₃)₂, RaNbO, RaNbO₂, RaNbO₃ and Ra(NbO₃)₂,
   wherein the content of the alkaline earth metal is 0.01 to 10 % by weight relative to the total weight of the niobium oxide,
   wherein the content of the niobium oxide is 0.1 to 10 % by weight relative to the total weight of the positive electrode active material,
   wherein the average particle size of the positive electrode active material is 0.5 *µ*m to 10 *µ*m,
   wherein the average particle size of the niobium oxide is 0.1 *µ*m to 40 *µ*m,
   wherein the shell containing the niobium oxide is adsorbed to more than 60% of the area of the core based on the total area of the core.

### [Advantageous Effects]

The positive electrode active material for the all-solid-state battery according to the present invention has a structure in which a shell composed of niobium oxide partially containing an alkaline earth metal is adsorbed on the surface of a core containing a lithium metal oxide, and thus reduces a void phenomenon at the contact surface that may occur between the positive electrode active material and the solid electrolyte and side reactions between them, and at the same time, suppresses the increase in resistance at the electrode due to charging and discharging, and therefore, there is an advantage that the lifetime of an all-solid-state battery comprising it is improved.

### [Best Mode]

The present invention can apply various changes and can have various examples, and thus specific examples will be described in detail in the detailed description.

However, these descriptions are not intended to limit the present invention to specific embodiments, and it should be understood that the present invention includes all modifications, equivalents or substitutes included in the spirit and scope of the present invention.

In the present invention, it is to be understood that the terms "comprise" or "have" are intended to designate the presence of stated features, numbers, steps, operations, components, parts or combinations thereof, but not to preclude the possibility of the presence or addition of one or more other features, numbers, steps, operations, components, parts, or combinations thereof.

Also, in the present invention, when a portion of a layer, film, region, plate, etc. is described as being "on" another portion, this includes not only instances where it is "directly on" another portion, but also instances where another portion is in between. Conversely, when a portion of a layer, film, region, plate, etc. is described as being "under" another portion, this includes not only instances where it is "directly under" another portion, but also instances where another portion is in between. In addition, in the present application, being disposed "on" may include the case of being disposed not only on the upper part but also on the lower part.

In addition, in the present invention, the expression "comprising as a main component" may mean 50 % by weight or more, 60 % by weight or more, 70 % by weight or more, 80 % by weight or more, 90% by weight or more, 95 % by weight or more, or 97.5 % by weight or more relative to the total weight of the composition, such as a slurry or a specific component, and in some cases, may mean a case of constituting the entire composition or specific component, that is, 100 % by weight.

Hereinafter, the present invention will be described in more detail.

### Positive electrode active material for secondary battery

The present invention, in one embodiment, provides a positive electrode active material for an all-solid-state battery comprising,
a core containing a lithium metal oxide; and
a shell adsorbed on the surface of the core and containing niobium oxide,
wherein the niobium oxide comprises an alkaline earth metal.

The positive electrode active material according to the present invention is used in a secondary battery, which contains, as a core, a lithium metal oxide that exhibits electrical activity during charging and discharging of the battery, and has a structure in which particles comprising niobium oxide are adsorbed on the surface of the core to form a shell.

In one embodiment of the present invention, the secondary battery may be an all-solid-state battery.

In one embodiment of the present invention, the all-solid-state battery may be a sulfide-based all-solid-state battery.

Here, the lithium metal oxide may be used without particular limitation as long as it is a lithium metal oxide that provides lithium ions by reacting reversibly during charging and discharging of the battery. Specifically, a lithium metal oxide represented by Formula 1 below may be comprised:

[Formula 1] Liₓ[Ni_{y}Co_{z}Mn_{w}M¹ᵥ]Oᵤ

wherein,
M¹ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, and 1.5≤u≤4.5, respectively.

The lithium metal oxide represented by Formula 1 may be an oxide containing a transition metal together with lithium, which may comprise nickel in a high content among the transition metals. As an example, the lithium metal oxide may comprise at least one selected from the group consisting of LiNi_{0.9}Co_{0.05}Mn_{0.05}O₂, LiNi_{0.8}CO_{0.1}Mn_{0.1}O₂, LiNi_{0.7}CO_{0.15}Mn_{0.15}O₂, LiNi_{0.6}Co_{0.2}Mn_{0.2}O₂, LiNi_{0.6}Co_{0.2}Mn_{0.1}Al_{0.1}O₂, LiNi_{0.7}Co_{0.1}Mn_{0.1}Al_{0.1}O₂, and LiNi_{0.8}Co_{0.1}Mn_{0.05}Al_{0.05}O₂. Since the lithium metal oxide contains nickel in a high content, it has an excellent effect of improving the charging/discharging capacity of the battery.

In addition, the core has a structure in which the shell containing niobium oxide is adsorbed on its surface. As a result, since the interfacial resistance between the positive electrode active material and the solid electrolyte is reduced and the resistance to side reactions between the positive electrode active material and the solid electrolyte is improved, the loss of lithium ions can be suppressed, thereby improving the electrical performance of the battery.

In this case, the niobium oxide may have the form of NbO, Nb02, Nb₂O₅, Nb₂O₆ or the like. As one example, the niobium oxide may have a composition containing Nb₂O₆ as a main component while including Nb₃O₅ and Nb₂O₆ in a uniformly mixed form. In this case, Nb₂O₅ may be contained in an amount of 10 % by weight or less based on the total weight of niobium oxide, and in some cases, Nb₂O₅ may not be contained, so it may have a content of 0% by weight based on the total weight of niobium oxide. The niobium oxide has excellent electrical properties and high thermodynamic stability, so it not only can effectively suppress side reactions between the positive electrode active material and the sulfide-based solid electrolyte during charging and discharging of the battery, but also has the advantage of good workability.

In addition, the niobium oxide may further comprise an alkaline earth metal. The alkaline earth metal may be contained in a form partially comprised in niobium oxide constituting the shell, and for example, niobium oxide containing alkaline earth metal may have a form such as SrNbO, SrNbO₂, SrNbO₃, Sr(NbO₃)₂, BaNbO, BaNbO₂, BaNbO₃, Ba(NbO₃)₂, RaNbO, RaNbO₂, RaNbO₃, Ra(NbO₃)₂.

As a result, can prevent the occurrence of cracks between the core and the shell caused by the detachment of the shell from the surface of the core due to contraction and expansion of the core during charging and discharging of the battery, and can suppress the induction of a void phenomenon at the interface of the active material and electrolyte.

Specifically, the lithium metal oxide represented by Formula 1 has a layered structure and thus exhibits large contraction and expansion properties according to charging and discharging of the secondary battery. Therefore, if the lithium metal oxide is contained in the core as an active material of the conventional positive electrode, the contraction and expansion of the core is repeatedly induced according to the charging and discharging of the battery, and as a result, while the resistance at the electrode is increased, the void phenomenon of the contact surface at the interface between the active material and the electrolyte is induced, and thus there is a limit that the lifetime of the battery is reduced. However, the niobium oxide containing the alkaline earth metal according to the present invention has excellent structural fluidity of the compound itself, and thus if the lithium metal oxide represented by Formula 1 is adsorbed to the core, the detachment of the shell due to the contraction and expansion of the core according to charging and discharging of the battery do not occur, and also the void phenomenon of the contact surface at the interface between the active material and the electrolyte can be significantly improved.

The alkaline earth metal may comprise at least one of strontium (Sr), barium (Ba), and radium (Ra) having an atomic radius equal to or greater than that of niobium (Nb), and specifically may comprise strontium (Sr) and barium (Ba) individually or together.

In addition, the alkaline earth metal may be contained in an amount of 0.01 to 10 % by weight relative to the total weight of niobium oxide contained in the shell, and specifically may be contained in an amount of 0.01 to 8 % by weight; 0.01 to 6 % by weight; 0.01 to 5 % by weight; 0.01 to 3 % by weight; 0.01 to 2 % by weight; 0.01 to 1 % by weight; or 0.01 to 0.5 % by weight relative to the total weight of niobium oxide.

The present invention can impart excellent electrical conductivity to the surface of the positive electrode active material during charging and discharging of the battery by controlling the content of the alkaline earth metal contained in the niobium oxide within the above range, and when the electrochemical action of the battery is not performed (for example, when charging/discharging is not performed), the present invention can prevent the battery from self-discharging by imparting insulation to the shell.

In addition, the niobium oxide particles may be contained in an amount of 0.1 to 10% by weight relative to the total weight of the positive electrode active material, and specifically may be contained in an amount of 0.1 to 8 % by weight; 0.1 to 6 % by weight; 0.1 to 5 % by weight; 0.1 to 3 % by weight; 1 to 4 % by weight; 1 to 3 % by weight; 2 to 6 % by weight; 4 to 8 % by weight; 0.1 to 2 % by weight; 0.1 to 1.5 % by weight; 0.3 to 1.5 % by weight; 0.5 to 1.5 % by weight; 0.9 to 1.5 % by weight; 0.3 to 0.9 % by weight; or 0.1 to 1.2 % by weight relative to the total weight of the positive electrode active material.

The present invention can prevent the contact void phenomenon at the interface of the positive electrode active material and the electrolyte by controlling the content of the niobium oxide contained in the positive electrode active material in the above range. In addition, it can be prevented from not sufficiently enclosing the surface of the lithium metal oxide due to the low content of the particles of the niobium oxide, or it is possible to prevent a large amount of the niobium oxide from coagulating with each other and not being coated on the surface of the lithium metal oxide.

In addition, the positive electrode active material may have an average particle size of 0.5 *µ*m to 10 *µ*m, and in this case, the niobium oxide positioned on the surface of the positive electrode active material may have a particle shape having an average particle size of 0.1 nm to 40 nm.

More specifically, the positive electrode active material may have an average particle size of 0.5 gm to 8 gm; 0.5 *µ*m to 6 *µ*m; 0.5 *µ*m to 5 *µ*m; 0.5 *µ*m to 4 *µ*m; 5 *µ*m to 9 *µ*m; 1 *µ*m to 4 *µ*m; 2 *µ*m to 4 *µ*m; 4 *µ*m to 7 *µ*m; 0.5 *µ*m to 3 *µ*m; 1 *µ*m to 3 *µ*m; or 3 *µ*m to 8 *µ*m, and the average particle size of the particles of the niobium oxide positioned on the surface of the positive electrode active material may be 0.1 nm to 30 nm; 0.1 nm to 20 nm; 0.1 nm to 10 nm; 5 nm to 30 nm; 5 nm to 20 nm; 8 nm to 15 nm; or 4 nm to 15 nm.

The present invention can further improve the activity of the electrode of the positive electrode by controlling the average particle size of the positive electrode active material in the above range, and can effectively suppress side reactions at the solid electrolyte and interface, and can prevent cracks that may occur on the surface of the positive electrode active material, while minimizing the decrease in the electrical activity of the lithium metal oxide of the core, by controlling the average particle size of the niobium oxide contained in the shell in the above range.

Furthermore, the shell containing the niobium oxide may surround the entire surface of the core containing the lithium metal oxide by 60% or more. Specifically, the particles of niobium oxide may have a structure that is physically and uniformly adsorbed on, not chemically bonded to, the surface of the core containing the lithium metal oxide. Here, the area to which the particles of niobium oxide are adsorbed may be 60% or more of the surface area of the core, and more specifically, may be 70 % or more, 80 % or more, 90 % or more, 95 % or more, or 98 % or more. The present invention can effectively suppress side reactions between the positive electrode active material and the solid electrolyte without using an excess of the niobium oxide by controlling the area adsorbed on the surface of the core by the shell containing the lithium metal oxide in the above ratio.

In addition, the positive electrode active material according to the present invention may further include a coating layer containing carbon on the shell. As the carbon coating layer is further included, electrical conductivity of the secondary battery may be improved. In addition, since the content of the conductive material can be reduced, aggregation of the conductive material can be improved, and the content of the active material can be increased, the electrical performance of the battery can be improved.

As the carbon included in the coating layer, one or more carbon materials selected from the group consisting of carbon (C) alone and Li-C compounds may be used.

Carbon included in the coating layer may be included in an amount of 0.1 to 2.0% by weight based on the total weight of the positive electrode active material, and specifically, 0.3 to 1.0% by weight based on the total weight of the positive electrode active material.

The coating of carbon on the shell may be coated using RAM (Resodyn Acoustic Mixers, RAM) mixing, but is not limited to this example, and any method capable of forming a coating layer containing carbon on the shell may be used.

The positive electrode active material for the all-solid-state battery according to the present invention has the advantage of reducing cracks, which may occur between the positive electrode active material and the solid electrolyte, and the reactivity between them, by having a structure in which the shell containing particles of the niobium oxide having a specific size is adsorbed on the surface of the core containing the lithium metal oxide, so that the mobility of lithium ions is improved and high charging and discharging capacity can be realized.

### Preparation method of positive electrode active material for secondary battery

The present invention, in one embodiment, provides a method for preparing a positive electrode active material for an all-solid-state battery comprising steps of,
preparing a mixture containing lithium metal oxide, niobium oxide and alkaline earth metal; and
heat-treating the mixture.

Herein, the lithium metal oxide may be represented by Formula 1 below:

[Formula 1] Liₓ[Ni_{y}Co_{z}Mn_{w}M¹ᵥ]Oᵤ

wherein,
M¹ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, and 1.5≤u≤4.5, respectively.

The preparation method of the positive electrode active material for the secondary battery according to the present invention may be performed by preparing a mixture containing the lithium metal oxide represented by Formula 1 constituting the core and the niobium oxide constituting the shell, and heat-treating it.

In this case, the step of preparing the mixture by mixing the lithium metal oxide and the niobium oxide may be performed using a dry mixer; a stirrer; a shaker such as an orbital shaker; a mortar mixer; a milling machine such as a planetary ball mill, etc. used in the art for mixing powders such as metal compounds, but is not limited thereto.

As an example, the step of preparing the mixture may be performed using a planetary ball mill at a speed of 50 to 500 rpm for 0.1 to 10 hours, and with a force of 1 to 100 kWH/1 kg for 1 kg of the mixture.

As another example, the step of preparing the mixture may be performed by mixing for 1 to 10 hours, specifically, 2 to 8 hours using a shaker.

In addition, in the mixture, the lithium metal oxide represented by Formula 1 may be an oxide containing a transition metal together with lithium, and in particular, an oxide containing a high content of nickel among the transition metals. As an example, the lithium metal oxide may comprise at least one selected from the group consisting of LiNi_{0.9}Co_{0.05}Mn_{0.05}O₂, LiNi_{0.8}CO_{0.1}Mn_{0.1}O₂, LiNi_{0.7}CO_{0.15}Mn_{0.15}O₂, LiNi_{0.6}Co_{0.2}Mn_{0.2}O₂, LiNi_{0.6}Co_{0.2}Mn_{0.1}Al_{0.1}O₂, LiNi_{0.7}Co_{0.1}Mn_{0.1}Al_{0.1}O₂, and LiNi_{0.8}Co_{0.1}Mn_{0.05}Al_{0.05}O₂.

In addition, the niobium oxide may further comprise an alkaline earth metal. If the alkaline earth metal is partially contained in the niobium oxide constituting the shell, it is possible to prevent the shell from being detached from the surface of the core due to contraction and expansion of the core containing the lithium metal oxide during charging and discharging of the battery, thereby preventing cracks between the core and the shell, and it is possible to suppress the induction of the void phenomenon of the contact surface at the interface of the active material and the electrolyte.

The alkaline earth metal may comprise at least one of strontium (Sr), barium (Ba), and radium (Ra) having an atomic radius equal to or greater than that of niobium (Nb), and specifically may comprise strontium (Sr) and barium (Ba) individually or together.

In addition, the alkaline earth metal may be contained in an amount of 0.01 to 5 % by weight relative to the total weight of niobium oxide contained in the shell, and specifically, may be contained in an amount of 0.01 to 3 % by weight; 0.01 to 2 % by weight; 0.01 to 1 % by weight; or 0.01 to 0.5 % by weight relative to the total weight of niobium oxide.

In addition, the niobium oxide may be used in the form of particles, and the average particle size of the particles may be 0.1 nm to 40 nm; 0.1 nm to 30 nm; 0.1 nm to 20 nm; 0.1 nm to 10 nm; 5 nm to 30 nm; 5 nm to 20 nm; 8 nm to 15 nm; or 4 nm to 15 nm.

In addition, the mixture may contain the niobium oxide in an amount of 0.1 to 10 % by weight relative to the total weight of the lithium metal oxide, and specifically, may contain in an amount of 0.1 to 8 % by weight; 0.1 to 6 % by weight; 0.1 to 5 % by weight; 0.1 to 3 % by weight; 1 to 4 % by weight; 1 to 3 % by weight; 2 to 6 % by weight; 4 to 8 % by weight; 0.1 to 2 % by weight; 0.1 to 1.5 % by weight; 0.3 to 1.5 % by weight; 0.5 to 1.5 % by weight; 0.9 to 1.5 % by weight; 0.3 to 0.9 % by weight; or 0.1 to 1.2 % by weight relative to the total weight of the lithium metal oxide.

The present invention may prevent from not sufficiently enclosing the surface of the lithium metal oxide due to the low content of the particles of the niobium oxide, or prevent a large amount of the niobium oxide from coagulating with each other and thus not being coated on the surface of the lithium metal oxide, by controlling the content of niobium oxide mixed with lithium metal oxide in the above range.

In addition, the step of heat-treating the mixture containing the lithium metal oxide and the niobium oxide can be said to be a step of fixing the niobium oxide physically adsorbed on the surface of lithium metal oxide, which is the core.

In this case, the temperature for heat treatment may be 300 °C or more, and preferably may be 300 °C to 900 °C; 400 °C to 900 °C; 500 °C to 900 °C; 600 °C to 900 °C; or 600 °C to 800 °C. In the present invention, the niobium oxide can be easily fixed to the surface of the lithium metal oxide without a side reaction on the surface of the lithium metal oxide, which is the core, by adjusting the temperature for the heat treatment of the mixture containing the lithium metal oxide and the niobium oxide to the above range.

In this case, the heat-treatment step may be performed in the range of 0.1 atm to 10.0 atm, preferably 0.3 atm to 9.5 atm; 0.5 atm to 9.0 atm; 0.7 atm to 8.5 atm; or 1.0 atm to 8.0 atm.

In addition, the heat-treatment step may be performed in the range of 1 hour to 10 hours, preferably, 1.5 hours to 9.5 hours; 2 to 9 hours; 2.5 hours to 8.5 hours; or 3 hours to 8 hours.

In addition, the positive electrode active material according to the present invention may further include a coating layer containing carbon on the shell, and the coating layer may be formed using RAM (Resodyn Acoustic Mixers, RAM) mixing, but is not limited to this example, any method capable of forming a coating layer containing carbon on the shell.

In addition, the present invention provides a method for preparing a positive electrode active material for a secondary battery in which the content of carbon included in the coating layer is 0.1 to 2.0% by weight based on the total weight of the cathode active material.

The preparation method of the positive electrode active material for the all-solid-state battery according to the present invention can form a shell formed by uniformly coating the niobium oxide on the surface of a core containing lithium metal oxide, and thus has an advantage of excellent preparing efficiency for the positive electrode active material having the core-shell structure.

### All-solid-state lithium secondary battery

Furthermore, the present invention, in one embodiment, provides an all-solid-state lithium secondary battery comprising,
a positive electrode comprising the positive electrode active material according to the present invention as described above;
a negative electrode; and
a sulfide-based solid electrolyte disposed between the positive electrode and the negative electrode.

The all-solid-state lithium secondary battery according to the present invention comprises the positive electrode containing the positive electrode active material of the present invention as described above, and thus the void phenomenon at the contact surface generated at the interface of the positive electrode active material and the solid electrolyte is significantly less, and also side reactions are suppressed, so the mobility of lithium ions in the electrode is excellent.

In this case, the positive electrode may have a structure in which a positive electrode mixture layer containing the positive electrode active material of the present invention described above is formed on a positive electrode current collector.

The positive electrode current collector is not particularly limited as long as it has high electrical conductivity without causing chemical change in the battery, and for example, may be stainless steel, aluminum, nickel, titanium, sintered carbon, or aluminum or stainless-steel surface-treated with carbon, nickel, titanium, silver or the like.

In addition, the positive electrode mixture layer contains a positive electrode active material, an electrically conductive material, a binder and a solid electrolyte, and in some cases may further contain an additive.

Here, the positive electrode active material may have a structure comprising a core containing a lithium metal oxide represented by the following Formula 1, and a shell adsorbed on the surface of the core and containing a niobium oxide.

[Formula 1] Liₓ[Ni_{y}Co_{z}Mn_{w}M¹ᵥ]Oᵤ

wherein,
M¹ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, and 1.5≤u≤4.5, respectively.

The lithium metal oxide may be included without particular limitation as long as it is a compound represented by Formula 1 and specifically, may comprise at least one selected from the group consisting of LiNi_{0.9}Co_{0.05}Mn_{0.05}O₂, LiNi_{0.8}Co_{0.1}Mn_{0.1}O₂, LiNi_{0.7}Co_{0.15}Mn_{0.15}O₂, LiNi_{0.6}Co_{0.2}Mn_{0.2}O₂, LiNi_{0.6}Co_{0.2}Mn_{0.1}Al_{0.1}O₂, LiNi_{0.7}Co_{0.1}Mn_{0.1}Al_{0.1}O₂, and LiNi_{0.8}Co_{0.1}Mn_{0.05}Al_{0.05}O₂.

In addition, the niobium oxide may further comprise an alkaline earth metal. If the alkaline earth metal is partially contained in the niobium oxide constituting the shell, it is possible to prevent the shell from being detached from the surface of the core due to contraction and expansion of the core containing the lithium metal oxide during charging and discharging of the battery, thereby preventing cracks between the core and the shell, and it is possible to suppress the induction of the void phenomenon of the contact surface at the interface of the active material and the electrolyte.

The alkaline earth metal may comprise at least one of strontium (Sr), barium (Ba), and radium (Ra) having an atomic radius equal to or greater than that of niobium (Nb), and specifically may comprise strontium (Sr) and barium (Ba) individually or together.

In addition, the alkaline earth metal may be contained in an amount of 0.01 to 5 % by weight relative to the total weight of niobium oxide contained in the shell, and specifically, may be contained in an amount of 0.01 to 3 % by weight; 0.01 to 2 % by weight; 0.01 to 1 % by weight; or 0.01 to 0.5 % by weight relative to the total weight of niobium oxide.

In addition, the niobium oxide may have the form of particles. Here, the average particle size of the particles may be 0.1 nm to 40 nm; 0.1 nm to 30 nm; 0.1 nm to 20 nm; 0.1 nm to 10 nm; 5 nm to 30 nm; 5 nm to 20 nm; 8 nm to 15 nm; or 4 nm to 15 nm.

In addition, the average particle size of the positive electrode active materials may be 0.5*µ*m to 10*µ*m; 0.5*µ*m to 8*µ*m; 0.5*µ*m to 6*µ*m; 0.5*µ*m to 5*µ*m; 0.5*µ*m to 4*µ*m; 5*µ*m to 9*µ*m; 1*µ*m to 4*µ*m; 2*µ*m to 4*µ*m; 4*µ*m to 7*µ*m; 0.5*µ*m to 3*µ*m; 1*µ*m to 3*µ*m; or 0.5*µ*m to 2*µ*m.

In addition, the electrically conductive material is not particularly limited as long as it has electrical conductivity without causing chemical change in the battery, and specifically, the electrically conductive material may be graphite, carbonaceous material, metal powder or metal fiber, needle-shaped or branched electrical conductivity whisker, electrical conductivity metal oxide, electrical conductivity polymer, and any one of these or a mixture thereof. More specifically, the electrically conductive material may be graphite such as natural graphite or artificial graphite; carbonaceous materials such as carbon black, acetylene black, Ketjen black, channel black, furnace black, lamp black, thermal black and carbon fiber; metal powder or metal fiber of copper, nickel, aluminum, silver, etc.; needle-shaped or branched electrical conductivity whiskers such as zinc oxide whisker, calcium carbonate whisker, titanium dioxide whisker, silicon oxide whisker, silicon carbide whisker, aluminum borate whisker, magnesium borate whisker, potassium titanate whisker, silicon nitride whisker, silicon carbide whisker, and alumina whisker; metal oxides with electrical conductivity such as titanium oxide, or conductive polymers such as polyphenylene derivatives, and one of them may be used or two or more mixtures may be used.

In addition, the binder for the positive electrode may be any one selected from the group consisting of N,N-bis[3-(triethoxysilyl)propyl]urea, polyethylene oxide (PEG), poly(vinylidene fluoride) (PVDF), poly(vinylidene fluoride-co-hexafluoropropylene) (PVDF-co-HFP); conjugated diene-based rubber latex such as acrylonitrile-based styrene butadiene rubber (SBR), acrylonitrile butadiene rubber (NBR), methyl methacrylate butadiene rubber (MBR), butadiene rubber (BR); carboxymethylcellulose (CMC), starch, hydroxypropyl cellulose, regenerated cellulose, polyvinyl pyrrolidone, tetrafluoroethylene, polyethylene, polypropylene, ethylenepropylene-diene monomer (EPDM), sulfonated-EPDM, styrenebutadiene rubber, fluorine rubber, various copolymers, etc., or a mixture of two or more thereof.

In addition, the negative electrode may have a structure in which a negative electrode mixture layer containing a negative electrode active material is formed on a negative electrode current collector.

The negative electrode current collector is not particularly limited as long as it has high electrical conductivity without causing chemical change in the battery, and for example, may be stainless steel, copper, nickel, titanium, sintered carbon or stainless-steel surface-treated with carbon, nickel, titanium, silver or the like.

In addition, the negative electrode mixture layer contains a negative electrode active material, an electrically conductive material, a binder, and a solid electrolyte, and in some cases may further contain an additive.

In this case, the negative electrode active material may be one selected from the group consisting of lithium metal, lithium alloy, lithium metal composite oxide, lithium-containing titanium composite oxide (LTO), and combinations thereof. Here, the lithium alloy may be an alloy made of lithium and at least one metal selected from Na, K, Rb, Cs, Fr, Be, Mg, Ca, Sr, Ba, Ra, Al and Sn. Also, the lithium metal composite oxide is an oxide (MeOₓ) of lithium and any one metal (Me) selected from the group consisting of Si, Sn, Zn, Mg, Cd, Ce, Ni, and Fe and for example, may be LiₓFe₂O₃(0<x≤1) or LiₓWO₂(0<x≤1).

In addition, the negative electrode active material may be metal composite oxides such as SnₓMe₁₋ₓMe'_{y}O_{z} (Me: Mn, Fe, Pb, Ge; Me': Al, B, P, Si, elements of groups 1, 2 and 3 of the periodic table, halogen; 0<x≤1; 1≤y≤3; 1≤z≤8); oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₃, and carbon-based negative electrode active materials such as crystalline carbon, amorphous carbon, or carbon composite may be used alone or in combination of two or more.

In addition, the electrically conductive material may be exemplified by nickel powder, cobalt oxide, titanium oxide, carbon, or the like. Carbon may be any one selected from the group consisting of Ketjen black, acetylene black, furnace black, graphite, carbon fiber, and fullerene, or at least one of these.

In addition, the binder for the negative electrode may be any one selected from the group consisting of N,N-bis[3-(triethoxysilyl)propyl]urea, polyethylene oxide (PEG), poly(vinylidene fluoride) (PVDF), poly(vinylidene fluoride-co-hexafluoropropylene) (PVDF-co-HFP); conjugated diene-based rubber latex such as acrylonitrile-based styrene butadiene rubber (SBR), acrylonitrile butadiene rubber (NBR), methyl methacrylate butadiene rubber (MBR), butadiene rubber (BR); carboxymethylcellulose (CMC), starch, hydroxypropyl cellulose, regenerated cellulose, polyvinyl pyrrolidone, tetrafluoroethylene, polyethylene, polypropylene, ethylenepropylene-diene monomer (EPDM), sulfonated-EPDM, styrenebutadiene rubber, fluorine rubber, various copolymers, etc. or a mixture of two or more thereof.

Furthermore, the solid electrolyte comprises sulfide-based particles, and the sulfide-based particles commonly used in the art may be applied as an electrolyte for a sulfide all-solid-state battery, and specifically one or more amorphous solid electrolytes selected from the group consisting of Li₂S-SiS₂, LiI-Li₂S-SiS₂, LiI-Li₂S-P₂S₅, Lil-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and Li₂S-P₂S₅ may be used.

The sulfide-based particles may have an average particle diameter of 0.1 *µ*m to 50 *µ*m, and specifically, an average particle diameter of 0.1 *µ*m to 10 *µ*m. The present invention can improve the problem of lowering the capacity of the battery due to the high porosity of the solid electrolyte, by controlling the average particle diameter of the sulfide-based particles constituting the solid electrolyte in the above range.

Hereinafter, the present invention will be described in more detail by way of examples and experimental examples.

However, the following examples and experimental examples only illustrate the present invention, and the content of the present invention is not limited to the following examples and experimental examples.

### Examples 1-8 and Comparative Examples 1-3: Preparation of positive electrode active material for sulfide all-solid-state battery

The niobium oxide was weighed, as shown in Table 1 below, relative to the total weight of LiNi_{0.8}Co_{0.1}Mn_{0.1}O₂ with an average particle size of 510.1 *µ*m, put into a ball mill jar, and ball-milled at a speed of 200150 rpm for 1 hour with a force of 10 kwH/lkg to obtain a mixture of LiNi_{0.8}Co_{0.1}Mn_{0.1}O₂ and the niobium oxide uniformly mixed. In this case, the niobium oxide containing the alkaline earth metal in Table 1 was used in an amount of 0.3% by weight relative to the total weight of the niobium oxide, and the amount used is as shown in Table 1.

After moving the mixture to an oven, the mixture was heat-treated at 700110 °C for 2 hours to obtain a positive electrode active material (average particle size: 5±0.1 *µ*m) coated with the niobium oxide uniformly on the surface of LiNi_{0.8}Co_{0.1}Mn_{0.1}O₂ which is the core.

In this case, as shown in Table 1 below, it was confirmed that if the content of the niobium oxide is less than 0.1 % by weight based on the total weight of lithium metal oxide, the surface of LiNi_{0.8}Co_{0.1}Mn_{0.1}O₂ which is the core cannot be sufficiently coated; and it was confirmed that if the content of the niobium oxide exceeds 10% by weight, the particles of the niobium oxide in the mixture aggregate with each other and thus are not uniformly adsorbed on the surface of LiNi_{0.8}Co_{0.1}Mn_{0.1}O₂.

**Table 1:**

| | Niobium oxide | | Ratio of adsorption area of shell to core area |
|---|---|---|---|
| | Kind of alkaline earth metal | Content | |
| Example 1 | Sr | 1 | about 89% |
| Example 2 | Sr | 2 | about 93% |
| Example 3 | Sr | 8 | about 98% |
| Example 4 | Ba | 2 | about 92% |
| Example 5 | Sr and Ba (1:1 wt.wt.) | 2 | about 94% |
| Example 6 | Sr | 0.05 | about 34% |
| Example 7 | Sr | 15 | ≒ 100% |
| Example 8 | Sr | 1 | About 900 |
| Comparative Example 1 | B | 2 | about 95% |
| Comparative Example 2 | LiNb₂O₃ | 2 | about 94% |
| Comparative Example 3 | Nb₂O₅ | 2 | about 910 |

In addition, the positive electrode active material of Example 8 was prepared by additionally coating carbon (C) on the positive electrode active material uniformly coated with niobium oxide on the core surface of LiNi_{0.8}Co_{0.1}Mn_{0.1}O₂ prepared in Example 1. Specifically, after quantitatively ram-mixing the primary coated active material and carbon black for carbon (C) coating with Resodyn Acoustic Mixers(RAM) (intensity of gravitational acceleration value: 100 G, time: 2 minutes), weakly heating at a temperature of 100 °C or less heating was prepared. The coating amount of Example 8 was 0.5 wt% of the weight ratio of carbon black to the active material to prepare a carbon(C)coated positive electrode active material.

### Examples 9-16 and Comparative Examples 4-6: Manufacture of sulfide all-solid-state battery

Sulfide all-solid-state batteries were manufactured using each positive electrode active material prepared in Examples 1 to 8 and Comparative Examples 1 to 3 above.

Specifically, the positive electrode active material prepared in Examples and Comparative Examples, respectively, a sulfide-based solid electrolyte (Li2S-P2SS), an electrically conductive material (carbon black) and a binder (PVDF) were mixed at a weight ratio of 80:15:3:2 of positive electrode active material:sulfide-based solid electrolyte (Li2S-P2SS):electrically conductive material (carbon black):binder (PVDF), coated on an aluminum thin plate (thickness: 40*µ*m), and rolled at room temperature to prepare a positive electrode.

Separately, a lithium metal (Li) thin plate (thickness: 40 *µ*m ) was prepared as a negative electrode. A solid electrolyte film (70 *µ*m, 2.8×10⁻³ S/cm, LilOSnP2S12) was interposed between the prepared positive electrode and the negative electrode to manufacture a sulfide-based all-solid-state battery.

**Table 2:**

| | Positive electrode active material used |
|---|---|
| Example 9 | positive electrode active material of Example 1 |
| Example 10 | positive electrode active material of Example 2 |
| Example 11 | positive electrode active material of Example 3 |
| Example 12 | positive electrode active material of Example 4 |
| Example 13 | positive electrode active material of Example 5 |
| Example 14 | positive electrode active material of Example 6 |
| Example 15 | positive electrode active material of Example 7 |
| Example 16 | positive electrode active material of Example 8 |
| Comparative Example 4 | positive electrode active material of Comparative Example 1 |
| Comparative Example 5 | positive electrode active material of Comparative Example 2 |
| Comparative Example 6 | positive electrode active material of Comparative Example 3 |

### Experimental Example

The following experiment was performed to evaluate the performance of the positive electrode active material for the sulfide all-solid-state battery according to the present invention.

### A) Analysis of the cross-sectional structure of the positive electrode mixture layer

The sulfide all-solid-state batteries prepared in Examples and Comparative Examples, respectively, were prepared under non-atmosphere, and cycled under the conditions of 3.0 to 4.25 V and 0.1 C at room temperature (2511 °C). After that, each battery was disassembled and a scanning electron microscope (SEM) analysis was performed on the mixture layer of the positive electrode.

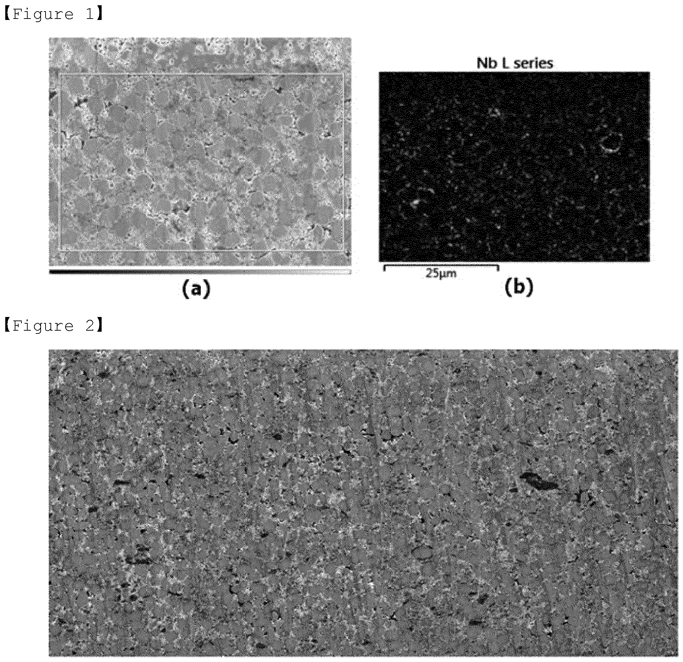

First, SEM imaging results of the positive electrode mixture layer of Example 1 are shown in FIG. 1. In FIG. 1, (a) is an SEM cross section of the positive electrode mixture layer of Example 1, and (b) is the result of observation by energy dispersive X-ray spectroscopy (EDX). As a result, it was confirmed that in the case of the battery of Examples according to the present invention, the niobium oxide is uniformly adsorbed on the surface of the lithium metal oxide (LiNi_{0.8}Co_{0.1}Mn_{0.1}O₂), which is the core. This means that the void phenomenon at the contact surface generated at the interface between the lithium metal oxide contained in the core and the sulfide-based solid electrolyte was prevented, and side reactions were suppressed.

On the other hand, SEM imaging results of the positive electrode mixture layer of Comparative Example 1 are shown in FIG 2. As a result, it was confirmed that in the batteries of Comparative Examples, a crack occurs between the lithium metal oxide (LiNi_{0.8}Co_{0.1}Mn_{0.1}O₂), which is the core, and the sulfide-based solid electrolyte.

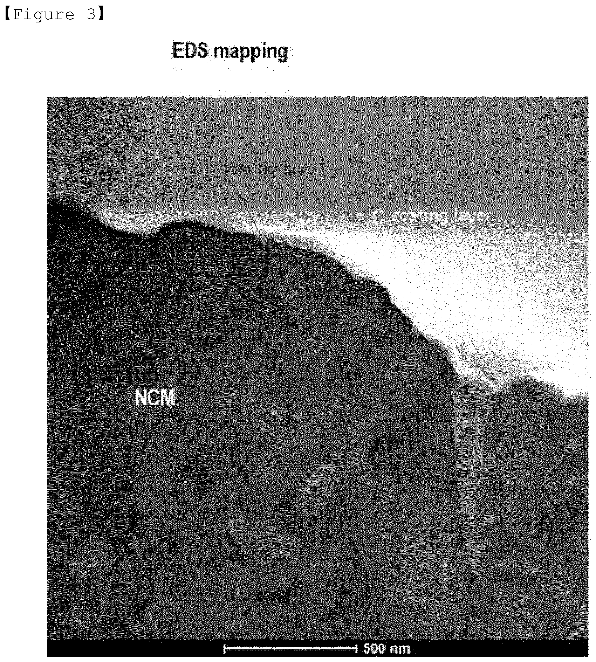

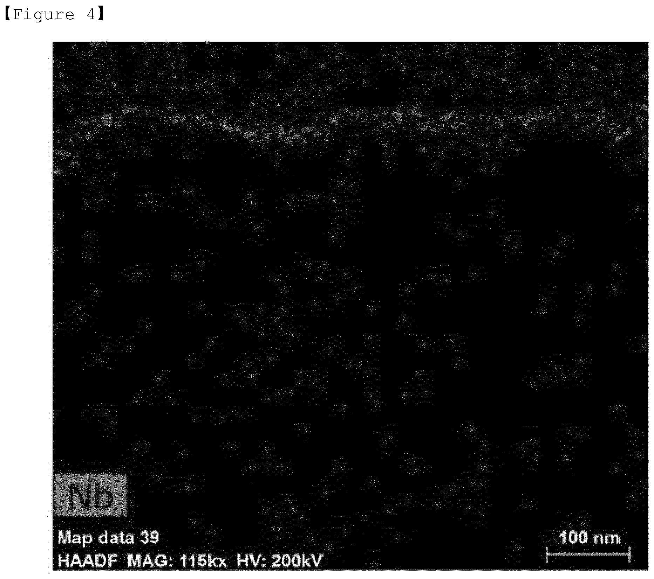

The positive electrode active material of Example 8 was photographed with a transmission electron microscope (TEM) and shown in FIG. 3, and it was confirmed that a carbon coating layer was formed on the niobium oxide coating layer. In addition, the positive electrode active material of Example 8 was photographed with a transmission electron microscope (TEM) and shown in FIG. 4, and it was found that the carbon layer was uniformly coated on the primary coating layer.

From these results, it can be seen that since the positive electrode active material of the sulfide all-solid-state battery according to the present invention has a structure in which the niobium oxide containing the alkaline earth metal is adsorbed to the surface of the core containing the lithium metal oxide to form a shell, the occurrence of the void phenomenon at the contact surface between the lithium metal oxide of the core and the solid electrolyte and their side reactions is prevented.

### B) Evaluation of lifetime of battery

The sulfide all-solid-state batteries prepared in Examples 9-16 and Comparative Examples 4-6, respectively, were fixed to a jig inside the chamber at 60 °C, and initial charging and discharging were performed under the condition of 0.1C to measure the initial charging capacity. At this time, the charging was performed in a constant current charging (CCC) method, and c/o was controlled to 0.05C.

After repeating charging and discharging 300 times under the same conditions, the charging capacity was measured at the time of charging 300 times, and the maintained charging capacity ratio was calculated based on the initial charging capacity. The results are shown in Table 3 below.

**Table 3:**

| | Charging capacity retention rate after 300 charging/discharging cycles |
|---|---|
| Example 9 | 93% |
| Example 10 | 95% |
| Example 11 | 960 |
| Example 12 | 94% |
| Example 13 | 97% |
| Example 14 | 830 |
| Example 15 | 870 |
| Example 16 | 93% |
| Comparative Example 4 | 710 |
| Comparative Example 5 | 820 |
| Comparative Example 6 | 760 |

As shown in Table 3 above, it was confirmed that since the positive electrode active material for the sulfide all-solid-state battery in Example has a structure in which a shell containing niobium oxide containing the alkaline earth metal is adsorbed to the surface of the core containing the lithium metal oxide, even when charging and discharging are repeatedly performed, it has a high charging capacity retention rate of 90 % or more.

In addition, in the case of Example 16 in which a carbon coating layer was added on the niobium oxide coating layer, it was confirmed that the energy density per volume could be increased while maintaining lifespan characteristics even when the content of the active material was increased.

This means that even if the positive electrode active material of the present invention is repeatedly charged and discharged, shell detachment due to contraction/expansion of the core does not occur, and also the void phenomenon at the contact surface between the positive electrode active material and the electrolyte is improved, thereby preventing an increase in resistance at the electrode.

From these results, it can be seen that in the case of the positive electrode active material for the sulfide all-solid-state battery according to the present invention, the void phenomenon of the contact surface at the interface between the positive electrode active material and the solid electrolyte and side reactions are reduced, preventing an increase in resistance at the electrode due to charging and discharging, so the lifetime of the battery can be improved.

In addition, through the results of Example 16, it was found that the energy density could be secured by increasing the active material content.

In the above, the present invention has been described with reference to preferred examples of the present invention. However, it will be understood by those skilled in the art or those having ordinary skill in the art that various modifications and changes can be made to the present invention without departing from the spirit and scope of the present invention as set forth in the claims to be described later.

Accordingly, the technical scope of the present invention should not be limited to the content described in the detailed description of the specification, but should be defined by the claims.

## Claims

1. A positive electrode active material for a secondary battery comprising,
a core containing a lithium metal oxide; and
a shell adsorbed on the surface of the core and containing niobium oxide,
wherein the niobium oxide comprises an alkaline earth metal.

2. The positive electrode active material for the secondary battery according to claim 1,
wherein the lithium metal oxide is represented by the following Formula 1:
[Formula 1] Liₓ[Ni_{y}Co_{z}Mn_{w}M¹ᵥ]Oᵤ
wherein,
M¹ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, 1.5≤u≤4.5, respectively.

3. The positive electrode active material for the secondary battery according to claim 1, wherein niobium oxide comprising alkaline earth metal is selected from the group consisting of SrNbO, SrNbO₂, SrNbO₃, Sr(NbO₃)₂, BaNbO, BaNbO₂, BaNbO₃, Ba(NbO₃)₂, RaNbO, RaNbO₂, RaNbO₃ and Ra(NbO₃)₂.

4. The positive electrode active material for the secondary battery according to claim 1, wherein the content of the alkaline earth metal is 0.01 to 10 % by weight relative to the total weight of the niobium oxide.

5. The positive electrode active material for the secondary battery according to claim 1, wherein the content of the niobium oxide is 0.1 to 10 % by weight relative to the total weight of the positive electrode active material.

6. The positive electrode active material for the secondary battery according to claim 1, wherein the average particle size of the positive electrode active material is 0.5 *µ*m to 10 *µ*m.

7. The positive electrode active material for the secondary battery according to claim 1, wherein the shell containing the niobium oxide is adsorbed to more than 60% of the area of the core based on the total area of the core.

8. The positive electrode active material for the secondary battery according to claim 1, wherein the secondary battery further comprises a coating layer containing carbon on the shell.

9. The positive electrode active material for the secondary battery according to claim 1, wherein the content of carbon contained in the coating layer is 0.1 to 2.0 % by weight based on the total weight of the positive electrode active material.

10. The positive electrode active material for the secondary battery according to claim 1, wherein the secondary battery is an all-solid-state battery.

11. The positive electrode active material for the secondary battery according to claim 10, wherein the all-solid-state battery is a sulfide-based all-solid-state battery.

12. A method for preparing a positive electrode active material for an secondary battery comprising steps of,
preparing a mixture containing lithium metal oxide, niobium oxide and alkaline earth metal; and
heat-treating the mixture.

13. The method for preparing a positive electrode active material for an secondary battery according to claim 12,
wherein the lithium metal oxide is represented by Formula 1 below:
[Formula 1] Liₓ[Ni_{y}Co_{z}Mn_{w}M¹ᵥ]Oᵤ
wherein,
M¹ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, 1.5≤u≤4.5, respectively.

14. The method for preparing the positive electrode active material for the secondary battery according to claim 12, wherein the mixture contains niobium oxide in an amount of 0.1 to 10 % by weight relative to the total weight of the mixture.

15. The method for preparing the positive electrode active material for the secondary battery according to claim 12, wherein the step of heat-treating is performed at 300 °C to 900 °C.

16. The method for preparing the positive electrode active material for the secondary battery according to claim 12, wherein the step of heat-treating is performed in the range of 0.1 atm to 10.0 atm.

17. The method for preparing the positive electrode active material for the secondary battery according to claim 12, wherein the step of heat-treating is performed in the range of 1 hour to 10 hours.

18. The method for preparing a positive electrode active material for a secondary battery according to claim 12, further comprising steps of:
after the heat-treatment step, forming a coating layer containing carbon on at least a portion of the surface of the shell.

19. The method for preparing a positive electrode active material for an secondary battery according to claim 18, wherein the content of carbon contained in the coating layer is 0.1 to 2.0 % by weight based on the total weight of the positive electrode active material.

20. An all-solid-state lithium secondary battery comprising,
a positive electrode comprising the positive electrode active material according to claim 1;
a negative electrode; and
a sulfide-based solid electrolyte disposed between the positive electrode and the negative electrode.

21. The all-solid-state lithium secondary battery according to claim 20, wherein the sulfide-based solid electrolyte comprises at least one selected from the group consisting of Li2S-SiS2, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and Li₂S-P₂S₅.

22. A device comprising the all-solid-state lithium secondary battery according to claim 20.

23. The device according to claim 22, wherein the device is an electric vehicle.

24. A positive electrode active material for a secondary battery comprising,
a core containing a lithium metal oxide; and
a shell adsorbed on the surface of the core and containing niobium oxide, wherein the niobium oxide comprises an alkaline earth metal,
wherein the lithium metal oxide is represented by the following Formula 1:
[Formula 1] Liₓ[Ni_{y}Co_{z}Mn_{w}M¹ᵥ]Oᵤ
wherein,
M¹ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are 1.0≤x≤1.30, 0.1≤y<0.95, 0.01<z≤0.5, 0.01<w≤0.5, 0≤v≤0.2, 1.5≤u≤4.5, respectively,
niobium oxide comprising alkaline earth metal is selected from the group consisting of SrNbO, SrNbO₂, SrNbO₃, Sr(NbO₃)₂, BaNbO, BaNbO₂, BaNbO₃, Ba(NbO₃)₂, RaNbO, RaNbO₂, RaNbO₃ and Ra(NbO₃)₂,
wherein the content of the alkaline earth metal is 0.01 to 10 % by weight relative to the total weight of the niobium oxide,
wherein the content of the niobium oxide is 0.1 to 10 % by weight relative to the total weight of the positive electrode active material,
wherein the average particle size of the positive electrode active material is 0.5 *µ*m to 10 *µ*m,
wherein the average particle size of the niobium oxide is 0.1 *µ*m to 40 *µ*m,
wherein the shell containing the niobium oxide is adsorbed to more than 60% of the area of the core based on the total area of the core.
